# EUROPEAN PATENT APPLICATION

(11) **EP 1 964 711 A1**
(43) Date of publication of application: **03.09.2008**
(21) Application number: 07103344.3
(22) Date of filing: 01.03.2007
(51) Int. Cl.: B60N 2/30

(54) **A motor vehicle seat which is collapsible under the level of the motor vehicle floor**

(71) Applicant: Martur Sunger ve Koltuk Tesisleri Ticaret Sanayi A.S., 80670 Maslak Istanbul (TR)
(72) Inventor: Turletti, Massimo, 10149, Torino (IT)
(74) Representative: Notaro, Giancarlo

(57) **Abstract**

A motor vehicle seat is described that can be collapsed below the level of the vehicle floor, in which a cushion frame (2) is connected through an articulated parallelogram linkage (20) to a support structure (16) comprising a pair of vertical plates (17) that define a space between them to receive the seat (1) in the collapsed condition.

## Description

The present invention relates to motor vehicle seats, of the type including:
- a support structure, to be installed on the vehicle floor,
- a cushion frame, connected to the support structure through an articulated parallelogram linkage, including at least one front arm and at least one rear arm each articulated to the support structure and to the cushion frame, in such a manner that the cushion frame can be displaced between an operative raised position and an inoperative lowered position, and
- a backrest frame supported by the cushion frame.

A seat of the type specified above is, for example, described and illustrated in US 5 195 795. Seats of this type are adapted to be collapsed into a lowered position within a reduced space, located below the level of the vehicle floor, in order to enable the floor of the motor vehicle loading space to be enlarged.

The purpose of the present invention is that of providing a seat of the type specified above having a structure which is simple efficient in operation and inexpensive.

In view of achieving this purpose, the invention is directed to a motor vehicle seat having the characteristics indicated above and further characterised in that said support structure includes a pair of vertical plates substantially parallel to the vertical longitudinal plane of the seat and spaced apart from each other to define a space to receive the seat in its lowered condition, in that the backrest frame is pivotally connected to the cushion frame independently from said articulated parallelogram linkage, so that the backrest frame can be folded down and forwards above the cushion frame, whether this latter is maintained in its raised position or is in its lowered position, and in that said front and rear arms of the articulated parallelogram linkage are pivotally connected to the support structure at the upper portion of said vertical plates, in such a manner that when the seat frame is in its lowered position, with the backrest frame folded down above it, the entire seat occupies a space, in the vertical direction, substantially corresponding to the height of said vertical plates.

According to a further characteristic of the invention, said articulated parallelogram linkage includes at least one auxiliary arm having its ends articulated respectively to said front arm and to said rear arm of the articulated parallelogram linkage.

In the preferred embodiment of the invention, when the cushion frame is in its raised position, the articulations of the front and rear arms to the cushion frame are situated above (preferably approximately vertically above) the articulations of said arms to the support structure. Vice versa, when the cushion frame is in its lowered position, the articulations of the front and rear arms to the cushion frame are situated below (again for preference approximately vertically below) the articulations of said arms to the fixed support structure.

According to a further characteristic of the invention, the seat includes at least one locking device carried by the cushion frame and capable of co-operating both with a check element carried by the rear arm of the articulated parallelogram linkage, to lock the cushion frame in its raised position, and with a check element carried by the support structure, to lock the cushion frame in its lowered position. Said locking device is of the hook type that can be released through an actuating device. Preferably, this actuating device is connected through a flexible element, in tape or cable form, to an actuating portion.

Again according to a further characteristics of the invention, a locking device capable of locking the backrest frame either in its operative upright position or in its folded-down position above the cushion frame is associated to the articulated linkage between backrest frame and cushion frame. An actuating device is associated to this locking device to deactivate it.

Further characteristics and advantages of the invention will become clearly apparent in the description that follows, with reference to the annexed drawings, provided by way of non-limiting example, in which:
- figure 1 is a perspective view of a preferred embodiment of the seat structure according to the invention, in which the padding of the cushion and of the backrest of the seat is not shown for convenience of illustration,
- figure 2 is a diagrammatic side view of the structure of the seat in figure 1, in a first operative condition,
- figures 3 and 4 are views corresponding to those in figure 2 that illustrate the seat in two further operative conditions,
- figures 5 to 8 show some details of the seat in figure 1 at an enlarged scale, and
- figure 9 is a perspective view of the seat in figure 1 in the collapsed condition.

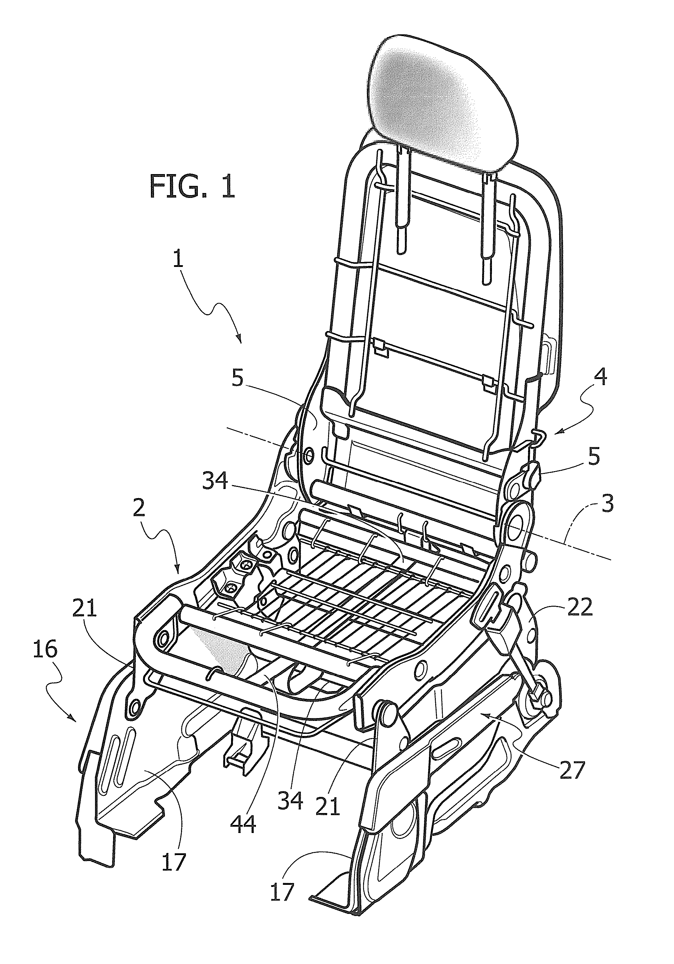

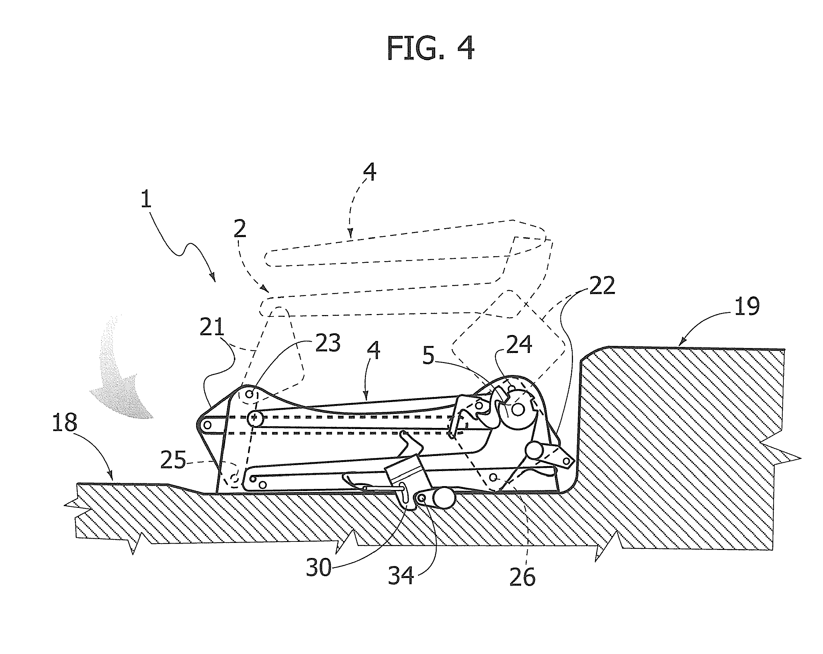

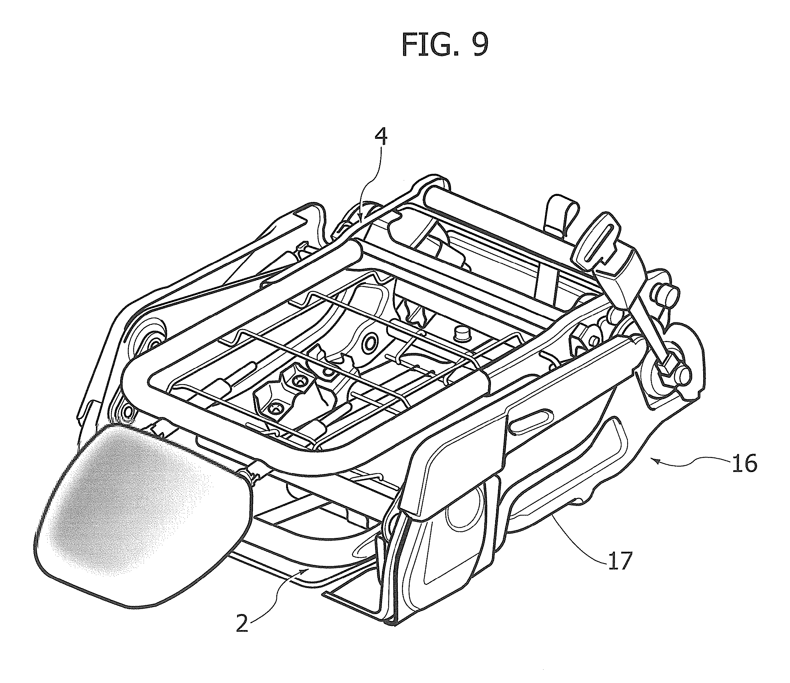

In the drawings, reference number 1 generally the structure of a motor vehicle seat that can be collapsed from a normal operative condition, shown in figure 1, to an inoperative condition, shown in figure 9, in which it remains substantially contained within a space situated beneath the level of the vehicle floor (see figure 4).

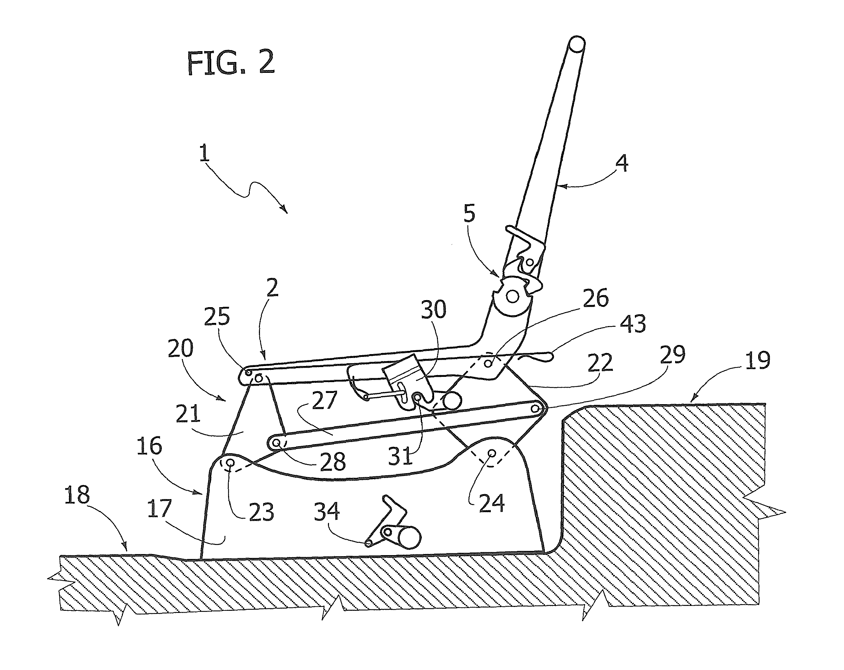

The structure of the seat 1 is shown in diagram form in figure 2 of the attached drawings. In that figure, reference number 2 indicates the cushion frame of the seat to which a backrest frame 4 is pivotally connected around a horizontal transversal axis 3.

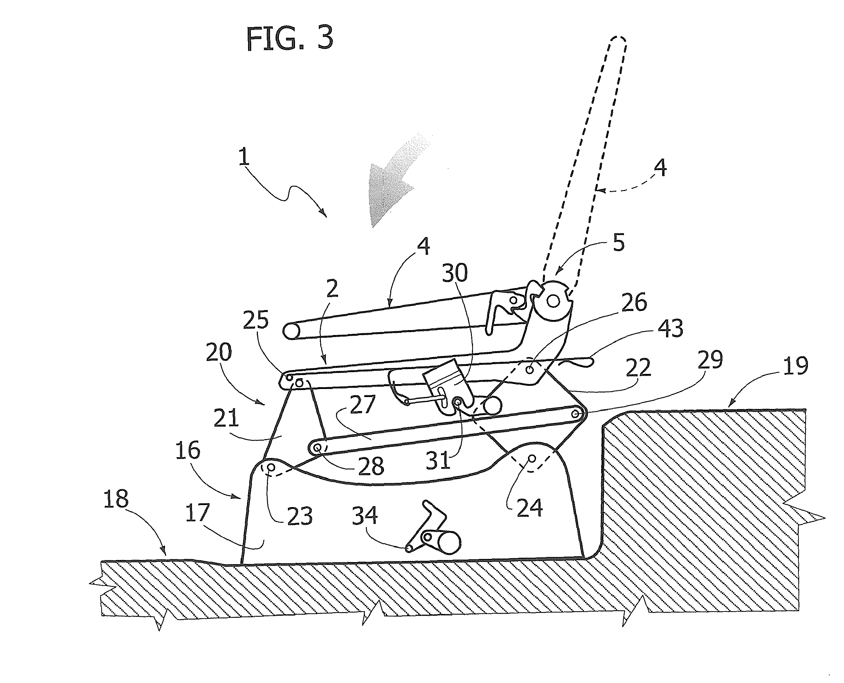

As indicated above, the padding of cushion and backrest are not illustrated in the attached drawings, to show the structure of the seat more clearly. The articulation of the backrest frame 4 around the articulation axis 3 is provided to enable the backrest frame 4 to be folded down from the upright operative condition shown in figure 2 to an inoperative condition, rotated forwards above the cushion frame 2, that is shown in figure 3. According to a preferred characteristic of the invention, the rear surface of the backrest of the seat provides a table surface 4a in the folded down condition shown in figure 3. For that purpose, the covering of the rear surface of the backrest of the seat preferably consists of a rigid panel, for example of plastic material (see figure 1) shaped in such a manner as to define said table surface. Naturally, in addition to the possibility of folding down the backrest frame 4 around the articulation axis 3, it may be provided with a device to adjust its inclination, of any type known per se (not shown). In this case, the axis of adjustment of the inclination of the backrest may he different from the axis of articulation 3 and may also be provided below said axis of articulation, in which case the cushion frame will present two lateral plates to support the backrest frame, on their turn connected to the cushion frame through an adjustment device.

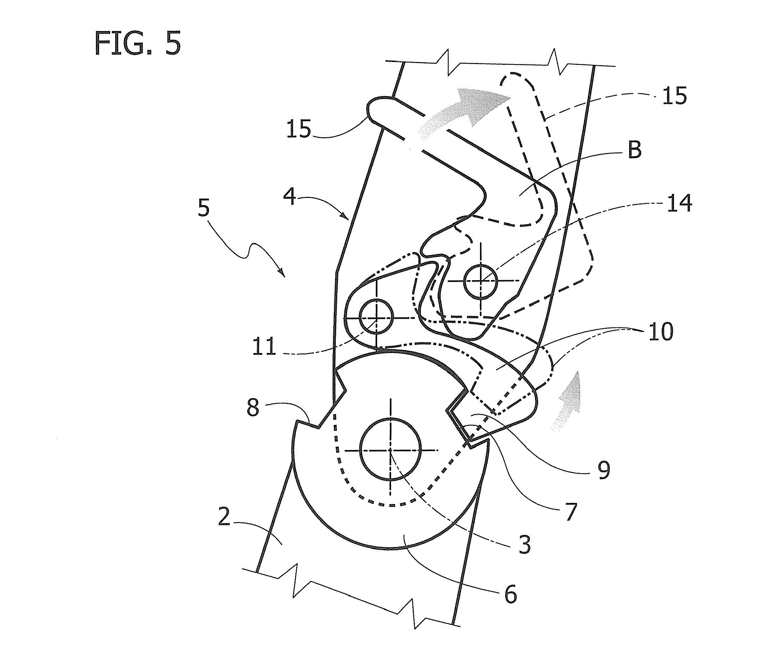

A locking device 5 is associated to the articulation around the axis 3, that enables the backrest frame 4 to be locked in the upright operative position of figure 2 or in the folded down position shown in figure 3. In the case of the embodiment shown here, the locking device 5 includes (see figure 5) a plate with circular profile 6, concentric with the articulation axis 3 and having two seats 7, 8 angularly equidistant one from the other, that receive an engaging member 9 respectively in the upright condition and in the folded down condition of the backrest frame 4. In the example shown, the engaging member 9 consists of the hook-shaped end of a lever 10 mounted on the backrest frame 4 so that it can oscillate around an oscillation axis 11. The lever 10 presents an arm 12 co-operating with a lever 13 likewise mounted on the backrest frame 4 so that it can oscillate around an axis of oscillation 14 and provided with an operating arm 15. Figure 5 shows as an example the locking device 5 in the condition of locking the backrest frame 4 in its upright position. The device 5 may be released by acting on the locking arm 15 in a clockwise direction (with regard to the drawing) so as to cause a clockwise rotation of the lever 10 around the axis of oscillation 11 and the consequent disengagement of the engaging portion 9 from the seat 7 of the plate 6. When the device 5 has been released, the backrest frame 4 may be folded down and forward, until the engaging portion 9 again engages with the plate 6, in correspondence with the seat 8, so as to lock the backrest frame 4 in its folded down condition above the cushion frame. Naturally, elastic means can also be associated to the lever 10 that tend to recall the lever 10 in a clockwise direction (with reference to figure 5) that is towards its condition of engagement with the seat 7 or the seat 8 of the plate 6.

With reference to figure 1, in the actual embodiment of the seat, two locking devices 5 are provided at the two sides of the seat, in correspondence with the articulation around the axis 3 between two lateral plates being part of the frame 4 of the seat-back and two lateral plates being part of the frame 2 of the cushion.

Again with reference to figures 1 and 3, the seat 1 presents a support structure 16, comprising a pair of vertical plates 17, parallel to the longitudinal vertical plane of the seat and provided inferiorly with flanges 18 to be fixed to the vehicle floor. As may be seen in figures 2-4, in the preferred embodiment, the support structure 16 comprising the two plates 17 is fixed onto a portion 18 of the vehicle floor that is at a lower level than a portion situated to the rear 19, constituting the loading deck of the motor vehicle. According to a further characteristic, the plates 17 extend vertically for a height substantially corresponding to the difference in level between planes 18 and 19.

Again with reference to the diagrams in figures 2-4, the cushion frame 2 is connected to the support structure 16 through an articulated parallelogram linkage 20 that, in principle, comprises at least one front arm 21 and at least one rear arm 22 that are articulated at 23 and 24 to the support structure 16 and at 25 and 26 to the cushion frame 2, in such a manner that the cushion frame can be displaced between the raised position shown in figure 2 and the lowered position shown in figure 4.

As may be seen in figure 1, in the concrete embodiment the articulated parallelogram linkage presents two front arms 21 and two rear arms 22 respectively situated at the two sides of the seat.

As may be seen in the figures, the articulations 23, 24 are situated in correspondence with upper portions of the supporting plates 17. In the operative condition of the cushion frame 2, the articulations 25, 26 are situated above (and approximately vertically above) the articulations 23, 24 (figure 2). Vice versa, in the collapsed condition of the seat, the articulations 25, 26 are below (and approximately vertically below) the articulations 23 and 24, in such a manner that the collapsed structure of the seat, with cushion frame 2 in lowered condition and backrest frame 4 folded down above it, occupies in the vertical direction a space substantially corresponding to the height of the support plates 17. In this way, in the said collapsed condition (Figure 4) the rear surface of the backrest comprises an extension of the floor19 of the loading space of the motor vehicle.

According to a further characteristic of the invention, the articulated parallelogram linkage 20 comprises an auxiliary articulated arm 27 having its two ends articulated respectively at 28 and 29 to intermediate portions of the front and rear arms 21, 22. Again with reference to figure 1, in the actual embodiment an auxiliary arm 27 is provided on each side of the seat.

The seat also includes at least one locking device 30 to lock the cushion frame 2 in its raised operative position (figure 2) or in its lowered position (figure 4).

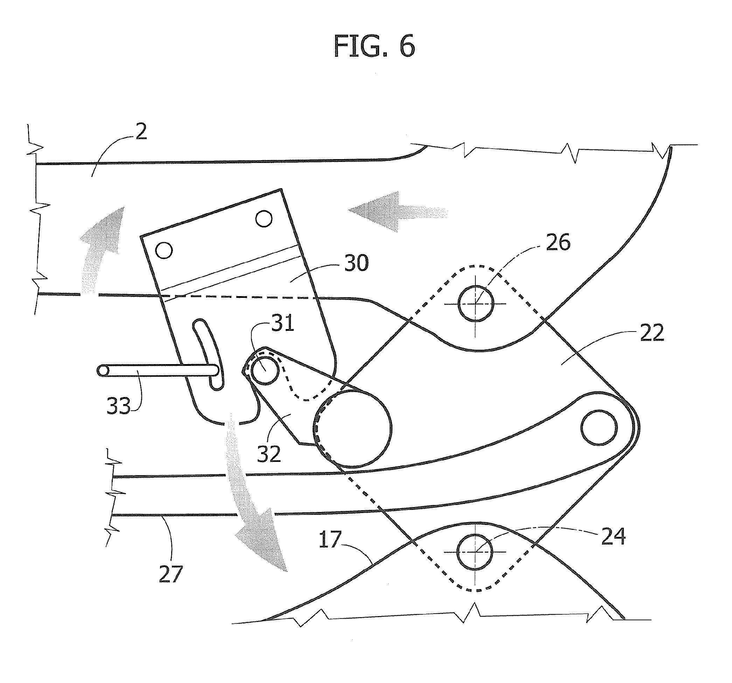

The locking device 30 is carried by the cushion frame 2 and is of a type in itself known, including a hook (not shown) that can be elastically engaged on a check pin 31 (figures 2, 6) carried by an arm 32 fixed to the rear arm 22 to lock the cushion frame 2 in its raised position. According to a technique that is of itself known, the locking device 30 is provided with a release device 33. In the actual embodiment (figure 1) two locking devices 30 are provided at the two sides of the cushion frame 2 whose release devices 33 are joined together by a cross-piece 34. The cross-piece 34 is driven through a flexible control member, of the tape or flexible cable type, as will be described in detail below.

Figure 6 of the attached drawings shows the locking device 30 in a condition of engagement of the pin 31 in correspondence with the raised position of the cushion frame 2. Once the locking device 30 has been released, the cushion frame 2 may be brought into its lowered position in correspondence with which the locking device 30 engages a check pin 34 that is carried by a lever 35 articulated around an axis 36 on a tubular cross-piece 37 comprising part of the fixed support structure.

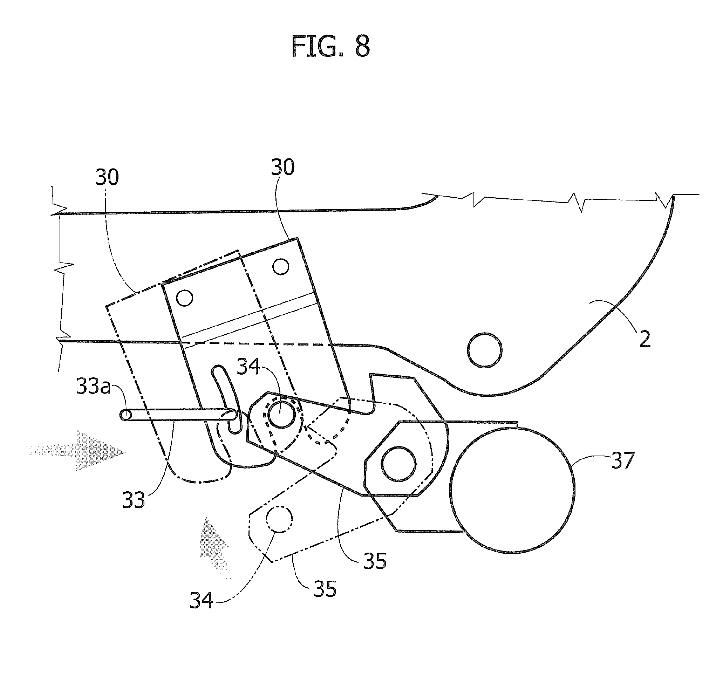

When the cushion frame 2 is brought into its lowered position, the locking device 30 engages with its casing against the lever 35 (that is initially in the position shown in dotted lines in figure 8) in such a manner as to cause it to rotate in a clockwise direction (with reference to figure 8) until it causes the rod 34 to engage with the locking device 30.

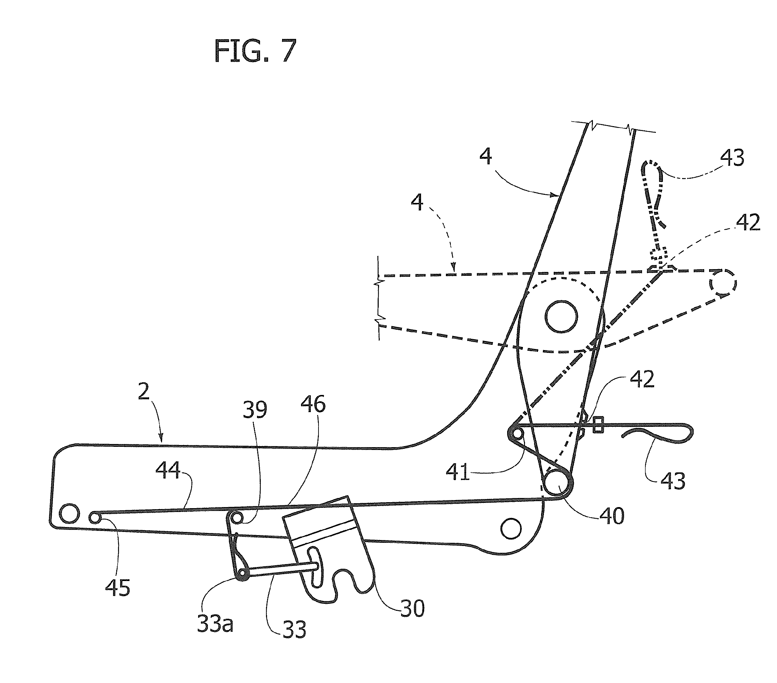

Figure 7 shows the actuating device for the release of the device 30. The extremity of a flexible tape element 38 is anchored to the cross-piece 34 (figure 1); this element is made to pass around pins 39, 40, 41 and through a guide passage 42 provided in the rear part of the seat-back. The flexible tape 38 ends beyond the passage 42 with an actuating portion 43.

Figure 7 shows in solid lines the condition corresponding to the raised position of the cushion frame 2. In that condition, the locking device 30 may be maintained active, so as to maintain the cushion frame 2 locked in the raised position, while the seat-back 4 may be folded down and forward above the cushion frame. In consequence of this movement the actuating extremity 43 of the flexible tape comes into the position shown with 43' in figure 7 thus applying a traction on the flexible tape 38. However, this traction is not such as to produce the release of the device 30, since it is compensated by the extension of an elastic element 44 interposed between a pin 45 anchored to the frame 2 and a portion 46 of the flexible tape 38. When, on the contrary, the user applies traction to the actuating portion 43, the cross-piece 34 moves causing the release of the two devices 30 situated at the two sides of the seat, with consequent possibility of lowering the frame 2 into its lowered position. A similar operation is performed when it is intended to release the seat from the collapsed position to raise it to its operative position.

As is clear from the above description, the seat according to the invention is characterised by a relatively simple and functional structure. At the same time it enables the seat to be collapsed into a space of very limited vertical dimensions (in a concrete embodiment the vertical dimension of the seat in its collapsed condition is approximately 15 cm) within a housing situated beneath the loading deck of the motor vehicle, in such a manner that the rear surface of the back of the seat acts as an extension of the loading deck.

At the same time, the seat according to the invention also enables a position to be achieved with the cushion frame raised and the seat-back folded down and forward to provide the function of a small table.

Naturally, the principle of the invention holding good, details of construction and embodiments may be widely varied with regard to what is described and illustrated as a simple example, without thereby departing from the sphere of the present invention.

For example, the vertical support plates might be replaced by lateral frames of any type, including not in plate form.

## Claims

1. Motor vehicles seat, including:
- a support structure (16), to be installed on the floor (18) of a motor vehicle,
- a cushion frame (2), connected to the support structure (16) through an articulated parallelogram linkage (20) comprising at the least one front arm (21) and at least one rear arm (22) articulated to the support structure (16) and to the cushion frame (2), in such a manner that the cushion frame (2) can be displaced between a raised operative position and at lowered inoperative position, and
- a backrest frame (4) carried by the cushion frame (2),
**characterised in that** the support structure (16) comprises a pair of vertical plates (17) substantially parallel to the longitudinal vertical plane of the seat (1) and spaced apart from each other to define a space to receive the seat (1) in the lowered condition,
and **in that** the backrest frame (4) is pivotally connected to the cushion frame (2) independently from said articulated parallelogram linkage (20), such that the backrest frame (4) can be folded down and forward above the cushion frame (2) both if this is maintained in its raised position, and if it is in its lowered position,
and **in that** said front and rear arms (21, 22) are pivotally connected to the support structure (16) at upper portions of said plates (17) in such a manner that when the seat frame (2) is in its lowered position, with the backrest frame (4) folded down above it, the entire seat occupies a space in the vertical direction that substantially corresponds to the height of said vertical plates (17).

2. Seat according to claim 1, **characterised in that** in said raised condition of the cushion frame (2) the articulations (25, 26) of said front and rear arms (21, 22) to the cushion frame (2) are situated above the articulations (23, 24) of said arms (21, 22) to the support structure (16), while in the lowered position of the cushion frame (2), said articulations (25, 26) to the cushion frame (2) are situated in a lower position than the articulations (23, 24) to the support structure (16).

3. Seat according to claim 2, **characterised in that** said articulated parallelogram linkage (20) comprises an auxiliary articulated arm (27) having its ends articulated respectively to said front arm and said rear arm (21, 22).

4. Seat according to claim 1, **characterised in that** it includes at least one locking device (30) carried by the cushion frame (2) capable of co-operating with a check element (31) carried by said rear arm (22) to lock the seat frame (2) in its raised position, and also capable of co-operating with a check element (34) carried by the fixed support structure to lock the cushion frame (2) in its lowered position.

5. Seat according to claim 4, **characterised in that** said locking device (30) is provided with a release device (33) connected through a flexible element, in cable or tape form (38), to an actuating portion (43).

6. Seat according to claim 5, **characterised in that** said flexible actuating element (38) is guided through a passage (42) provided in the structure of the back of the seat and **in that** said flexible element (38) has an intermediate portion (46) connected through an elastic element (44) to the structure of the cushion frame (2) in such a manner that folding the backrest structure down above the cushion frame does not cause actuation of the locking device (30).

7. Seat according to claim 1, **characterised in that** a locking device (5) is associated to the articulated parallelogram linkage of the backrest frame (4).

8. Seat according to claim 7, **characterised in that** the locking device (5) associated to the backrest frame (4) presents a plate (6) with seats (7, 8) that can be engaged by an engaging portion (9) respectively in the upright operative condition and in the folded down condition of the backrest frame (4).

9. Seat according to claim 8, **characterised in that** said engagement portion (9) is carried by an oscillating lever (10) mounted on the backrest frame (4) and that can be actuated through a release lever (15).
